# EUROPEAN PATENT APPLICATION

(11) **EP 3 848 897 A2**
(43) Date of publication of application: **14.07.2021**
(21) Application number: 21163809.3
(22) Date of filing: 19.03.2021
(51) Int. Cl.: G06T 7/33, G06T 11/60

(54) **IMAGE ADJUSTMENT METHOD AND APPARATUS, ELECTRONIC DEVICE AND STORAGE MEDIUM**

(30) Priority: 16.06.2020 CN 202010546176
(71) Applicant: Beijing Baidu Netcom Science and Technology Co., Ltd., Beijing 100085 (CN)
(72) Inventor: MA, Mingming, BEIJING, Beijing 100085 (CN); HONG, Zhibin, BEIJING, Beijing 100085 (CN)
(74) Representative: Brevalex

(57) **Abstract**

An image adjustment method and apparatus, an electronic device and a storage medium are provided. The image adjustment method includes: generating a combination image of a target person and a target clothing based on a target clothing image and a target person image; obtaining an adjustment parameter of the target clothing in the target clothing image based on image features of the target clothing image and image features of the combination image; obtaining a deformation image of the target clothing according to the adjustment parameter and the target clothing image.

## Description

### TECHNICAL FIELD

The present application relates to the technical fields of computer vision and deep learning, in particular to the technical field of image processing.

### BACKGROUND

In virtual fitting application scenarios, the following two schemes are generally used to realize combination of a target clothing and a target person, including: placing the target clothing on the target person through affine (projective) transformation of images, or, using the thin plate spline (TPS) function to find N matching points in two images and placing the target clothing on the target person based on the matching points.

### SUMMARY

The present application provides an image adjustment method and apparatus, an electronic device and a storage medium.

According to an aspect of the present application, an image adjustment method is provided and includes the following steps:
generating a combination image of a target person and a target clothing based on a target clothing image and a target person image;
obtaining an adjustment parameter of the target clothing in the target clothing image based on image features of the target clothing image and image features of the combination image; and
obtaining a deformation image of the target clothing according to the adjustment parameter and the target clothing image, wherein the deformation image is taken as an adjustment result of the target clothing image.

According to another aspect of the present application, an image adjustment apparatus is provided and includes:
a combination image generation module configured for generating a combination image of a target person and a target clothing based on a target clothing image and a target person image;
an adjustment parameter determination module configured for obtaining an adjustment parameter of the target clothing in the target clothing image based on image features of the target clothing image and image features of the combination image; and
an image adjustment module configured for obtaining a deformation image of the target clothing according to the adjustment parameter and the target clothing image, wherein the deformation image is taken as an adjustment result of the target clothing image.

According to a third aspect of the present application, one embodiment of the present application provides an electronic device including:
at least one processor; and
a memory communicatively connected to the at least one processor; wherein,
the memory stores instructions executable by the at least one processor to enable the at least one processor to implement the method of any one of the embodiments of the present application.

According to a fourth aspect of the present application, one embodiment of the present application provides a non-transitory computer-readable storage medium storing computer instructions for causing a computer to perform the method of any one of the embodiments of the present application.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
FIG. 1 is a flowchart of an image adjustment method according to a first embodiment of the present application;
FIG. 2 is a schematic diagram of generating a combination image according to the first embodiment of the present application;
FIG. 3 is a schematic diagram of obtaining an adjustment parameter according to the first embodiment of the present application;
FIG. 4 is a flowchart of determining image features according to the first embodiment of the present application;
FIG. 5 is a flowchart of obtaining an adjustment parameter according to the first embodiment of the present application;
FIG. 6 is a schematic diagram of calculating a feature fusion calculation result according to the first embodiment of the present application;
FIG. 7 is a flowchart of generating a combination image according to the first embodiment of the present application;
FIG. 8 is a flowchart of obtaining a deformation image according to the first embodiment of the present application;
FIG. 9 is a schematic diagram of an image adjustment apparatus according to a second embodiment of the present application;
FIG. 10 is a schematic diagram of an adjustment parameter determination module according to the second embodiment of the present application;
FIG. 11 is a schematic diagram of an adjustment parameter determination module according to the second embodiment of the present application;
FIG. 12 is a schematic diagram of a combination image generation module according to the second embodiment of the present application;
FIG. 13 is a schematic diagram of an image adjustment module according to the second embodiment of the present application;
FIG. 14 is a block diagram of an electronic device for implementing an image adjustment method according to an embodiment of the present application.

### DETAILED DESCRIPTION

The exemplary embodiments of the present application are described below in combination with the accompanying drawings, which include various details of the embodiments of the present application to facilitate understanding, and should be considered as merely exemplary. Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

However, the affine (projective) transformation is not suitable for deformations of flexible objects such as clothing, and will lead to multiple inaccurate positions. While deformation between transformation points of TPS is carried out by interpolation, which is easy to cause errors.

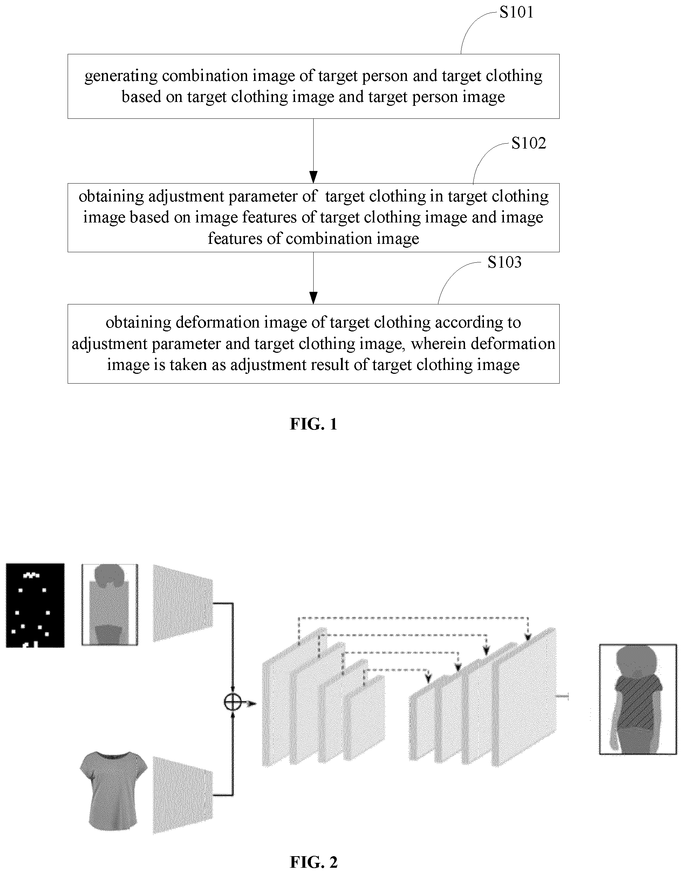

As shown in FIG. 1, in an embodiment, an image adjustment method is provided and includes the following steps:
S101: generating a combination image of a target person and a target clothing based on a target clothing image and a target person image;
S102: obtaining an adjustment parameter of the target clothing in the target clothing image based on image features of the target clothing image and image features of the combination image; and
S103: obtaining a deformation image of the target clothing according to the adjustment parameter and the target clothing image, wherein the deformation image is taken as an adjustment result of the target clothing image.

The foregoing embodiment of the present application may be implemented by a smart device with a screen, such as a smart phone, a laptop computer, etc. The target clothing image and the target person image may be acquired by taking pictures, visiting a photo album, or accessing the internet.

Through the foregoing solution, first, the combination image of the target person and the target clothing is generated; then, the adjustment parameter of the target clothing in the target clothing image is obtained according to the combination image and the target clothing image; and the adjustment parameter is applied to the target clothing image, thereby enabling the target clothing to present deformations that fit gestures and postures of the target person. As a result, since the final target clothing fits gestures and postures of the target person, the error in deformation performed by interpolation in the related art can be avoided by means of the adjustment parameter. Since it only needs to perform adjustment according to the adjustment parameter without calculation, it can reduce the error caused by calculation for the final target clothing.

With reference to FIG. 2, in the step S101, a first model may be adopted to generate the combination image. The first model may be a model including a feature matching neural network. The first model includes two inputs. A first input receives the target clothing image and extracts features of the target clothing. A second input receives the target person image and extracts features of the target person. After calculations such as convolution and up-sampling, the combination image of the target person and the target clothing can be obtained.

The combination image may be a rendering of the target person "putting on" the target clothing. That is, on the one hand, features of the parts of the target person, such as the head, neck, shoulders, arms and positions of the foregoing various parts in the target person image, can be obtained, by extracting human body key points and human body segmentation images from the target person. On the other hand, style features of the target clothing, such as long sleeve or short sleeve, round neck or V-neck and positions of collar, cuffs and hem of the target clothing in the target clothing image, may be extracted. Based on the extracted features, the target clothing and the target person are combined to obtain a mask of various parts of the target person covered by the target clothing, as shown on the right side of FIG. 2. The mask corresponds to a portion of the target person on the right side of FIG. 2 which is shown by shadow lines. In this embodiment, the mask may be taken as the combination image of the target person and the target clothing.

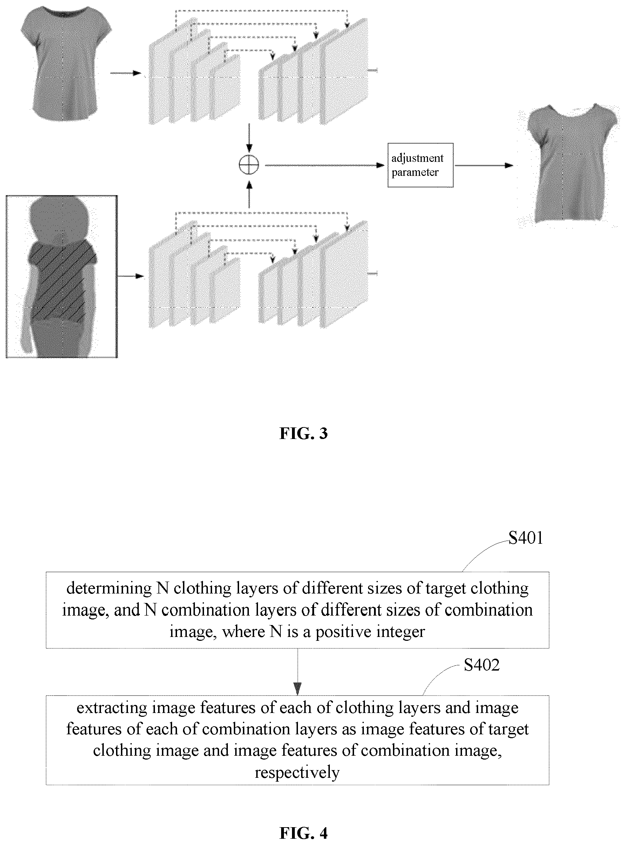

With reference to FIG. 3, in the step S102, a second model may be adopted to obtain the adjustment parameter of the target clothing in the target clothing image. The second model may be a model including a feature extraction network and a convolutional neural network. The feature extraction network in the second model may be used to extract the features of the target clothing image and the features of the combination image, respectively. The convolutional neural network may be used to perform convolution calculation on the extracted features, thereby obtaining the adjustment parameter of the target clothing in the target clothing image.

The features of the target clothing image may be the same as the features in the foregoing step S101. The features of the combination image may include a gesture feature and a posture feature of the target person's various parts covered by the target clothing. The gesture feature is used to characterize gestures and actions of the target person. The posture feature is used to characterize fatness and thinness of the target person. The convolutional neural network performs convolution calculations on the features of the target clothing image and the features of the combination image, thereby obtaining pixel-level adjustment parameters.

By using the pixel-level adjustment parameters, the deformation image of the target clothing can be obtained.

The pixel-level adjustment parameter may be mapping relationship between each pixel point in the deformation image and a pixel point in the target clothing image before adjustment. For example, coordinates of a first pixel point in the deformation image after adjustment are (x1, y1), and the first pixel point may correspond to a certain pixel point in the target clothing image before adjustment. For example, the first pixel point may correspond to an m-th pixel point in the target clothing image before adjustment, and coordinates of the m-th pixel point are (x'1, y'1). Then, the adjustment parameter may be directly expressed as (x'1, y'1). In addition, the adjustment parameter may also be expressed as (±xi, ±yi), where xi and yi may represent pixel units on an x-axis and a y-axis of an image, respectively. For example, when the adjustment parameter is (+xi, -yi), it can indicate that a pixel point with coordinates (x1+xi, y1-yi) in the target clothing image before adjustment is corresponding to the first pixel point in the deformation image after adjustment.

A target clothing shown on the rightmost side of FIG. 3 is the deformation image of the target clothing, which is obtained by adjusting the target clothing in the target clothing image by using the adjustment parameter. The deformation image is taken as an adjustment result of the target clothing image. The deformation image may be the target clothing that matches gestures and postures of the target person.

Through the foregoing solution, first, the combination image of the target person and the target clothing is generated; then, the adjustment parameter of the target clothing in the target clothing image is obtained according to the combination image and the target clothing image; and the adjustment parameter is applied to the target clothing image, thereby enabling the target clothing to present deformations that fit gestures and postures of the target person. As a result, since the final target clothing fits gestures and postures of the target person, the error in deformation performed by interpolation in the related art can be avoided by means of the adjustment parameter. Since it only needs to perform adjustment according to the adjustment parameter without calculation, it can reduce the error caused by calculation for the final target clothing.

As shown in FIG. 4, in one embodiment, the image features of the target clothing image and the image features of the combination image are determined in a way including:
S401: determining N clothing layers of different sizes of the target clothing image and N combination layers of different sizes of the combination image, where N is a positive integer; and
S402: extracting image features of each of the clothing layers and image features of each of the combination layers as the image features of the target clothing image and the image features of the combination image, respectively.

The feature extraction network in the second model may be a feature pyramid model. The feature pyramid model is used to extract layers of different sizes of an original image, for example, a total of N layers. Each layer of the target clothing image may be referred to as a clothing layer. Each layer of the combination image may be referred to as a combination layer.

According to different training data sets, the feature pyramid model can correspondingly extract different features. For example, human body gesture and human body part data sets may be used to train the feature pyramid model to extract features related to human body gestures and various parts of the human body. A clothing style data set may be used to train the feature pyramid module to extract clothing styles, including identification of long sleeves or short sleeves, round neck or V neck, as well as identification of positions of collar, cuffs and hem of the target clothing in the target clothing image and other features.

In an optional step, if an accuracy of a subsequent model is low, the target clothing image may further be pre-processed in advance. For example, a mask of the target clothing may be extracted from the target clothing image. Through the foregoing step, the target clothing may be extracted from the target clothing image in advance (in the target clothing image, backgrounds that have nothing to do with the target clothing is filtered out), thereby improving an accuracy of calculation in which the target clothing is involved in subsequent steps.

The features of all clothing layers, which are extracted by the feature pyramid model, may be taken as the image features of the target clothing image. The features of all combination layers, which are extracted by the feature pyramid model, may be taken as the image features of the combination image.

Through the foregoing solution, pixel-level features can be obtained, by extracting image features of layers of different sizes, thereby providing data accuracy support for subsequent calculation of the adjustment parameter.

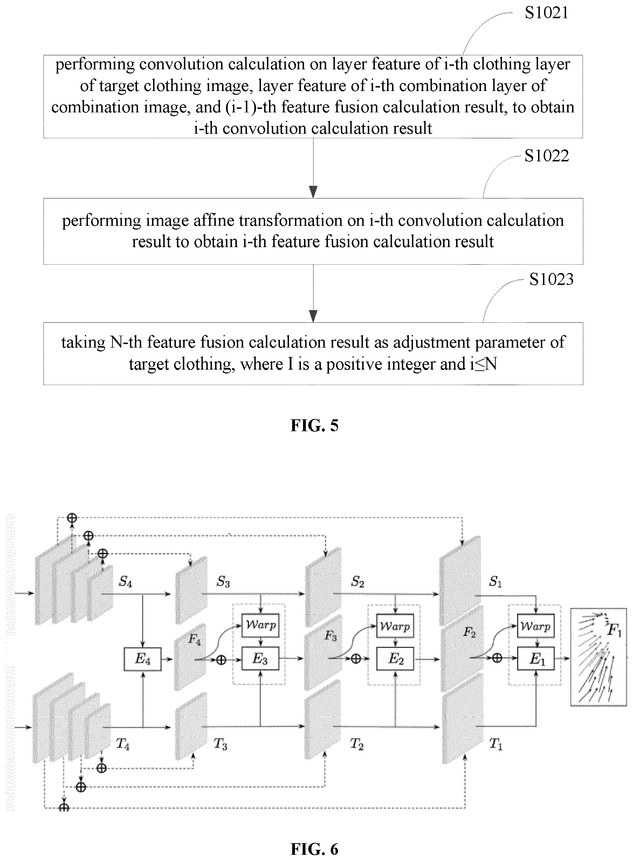

As shown in FIG. 5, in one embodiment, the step S102 includes:
S1021: performing convolution calculation on a layer feature of an i-th clothing layer of the target clothing image, a layer feature of an i-th combination layer of the combination image, and a (i-1)-th feature fusion calculation result, to obtain an i-th convolution calculation result;
S1022: performing an image affine transformation on the i-th convolution calculation result, to obtain an i-th feature fusion calculation result; and
S1023: taking an N-th feature fusion calculation result as the adjustment parameter of the target clothing, where i is a positive integer and i≤N.

FIG. 6 shows an example in which each of the target clothing image and the combination image includes 4 layers of different sizes. The sizes of the 4 layers of the target clothing image, from small to large, are S4, S3, S2, S1. The sizes of the 4 layers of the combination image, from small to large, are T4, T3, T2, T1. The size of the layer S4 is the same as the size of the layer T4. The size of the layer S3 is the same as the size of the layer T3. The size of the layer S2 is the same as the size of the layer T2. The size of the layer S1 is the same as the size of the layer T1. The layer S1 has the same size as the target clothing image, and the layer T1 has the same size as the combination image.

Firstly, the convolutional neural network in the second model performs convolution calculation on the layer feature of the layer S4 and the layer feature of the layer T4, thereby obtaining a first convolution calculation result E4. The layer S4 is equivalent to a first clothing layer, and the layer T4 is equivalent to a first combination layer. In this case, since it is for a first layer, there is no (i-1)-th feature fusion calculation result. That is, convolution calculation is directly performed on a layer feature of the first clothing layer of the target clothing image and a layer feature of the first combination layer of the combination image, thereby obtaining the first convolution calculation result.

Secondly, an image affine transformation (Warp) is performed on the first convolution calculation result E4, thereby obtaining a first feature fusion calculation result.

The convolutional neural network in the second model performs convolution calculation on the first feature fusion calculation result, the layer feature of the layer S3 and the layer feature of the layer T3, thereby obtaining a second convolution calculation result E3.

An image affine transformation is performed on the second convolution calculation result E3, thereby obtaining a second feature fusion calculation result. The rest can be done in the same manner, until a fourth feature fusion calculation result is calculated and taken as the adjustment parameter of the target clothing. That is, an output result F1 on the rightmost side in FIG. 6 is taken as the adjustment parameter of the target clothing.

The adjustment parameter may correspond to a set of mapping relationships. Each pixel point in the deformation image after adjusting the target clothing, corresponds to a pixel point in the target clothing image, thereby forming a mapping relationship. That is, each pixel point in the deformation image corresponds to one adjustment parameter. The adjustment parameter may be expressed in the form of coordinates.

Through the foregoing solution, features of each layer of the target clothing image and features of each layer of the combination image are fused, and various layers are related to each other, thereby achieving a better fusion effect, which makes the final output adjustment parameter more accurate.

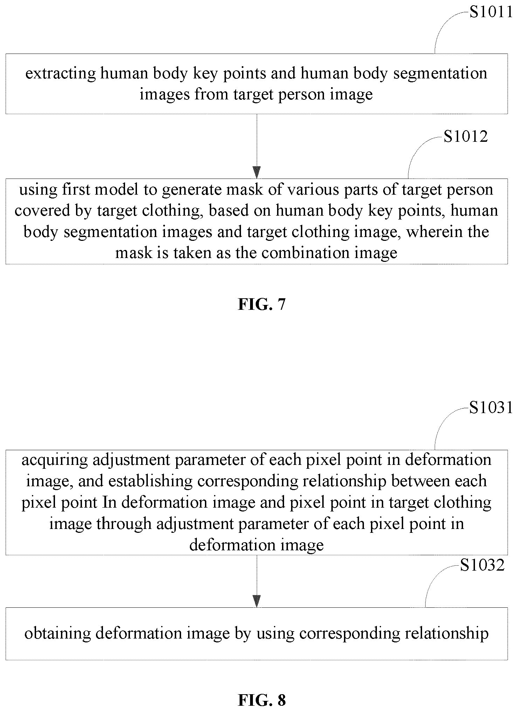

As shown in FIG. 7, in one embodiment, the step S101 includes:
S1011: extracting human body key points and human body segmentation images from the target person image; and
S1012: using a first model to generate a mask of various parts of the target person covered by the target clothing, based on the human body key points, the human body segmentation images and the target clothing image, wherein the mask is taken as the combination image.

A key point extraction model and a human body segmentation model may be used to pre-process the target person image to extract the human body key points and the human body segmentation images from the target person image.

As mentioned above, the first model may be a model including a feature matching neural network. By using the first model, according to the human body key points, the human body segmentation images and the target clothing image, a rendering of the target person "putting on" the target clothing can be determined. That is, a portion of the target person image, covered by the target clothing, is determined. Taking FIG. 2 as an example, the target clothing is a short-sleeved round-neck lady's T-shirt, then it can be determined that a shaded portion in the right image of FIG. 2 is a portion covered by the target clothing. This portion is the mask of various parts of the target person covered by the target clothing.

Through the foregoing solution, the combination image of the target person "putting on" the target clothing can be determined. Based on the combination image, subsequent deformation enables the target clothing to present deformations that fit gestures and postures of the target person.

As shown in FIG. 8, in one embodiment, the step S103 includes:
S1031: acquiring an adjustment parameter of each pixel point in the deformation image, and establishing a corresponding relationship between each pixel point in the deformation image and a pixel point in the target clothing image through the adjustment parameter of each pixel point in the deformation image; and
S1032: obtaining the deformation image by using the corresponding relationship.

For each pixel point in the deformation image, there is a corresponding adjustment parameter. The adjustment parameter may make the each pixel point correspond to a pixel point in the target clothing image. The term "corresponding" refers to that each pixel point in the deformation image is mapped from a pixel point in the target clothing image. By using this corresponding relationship, each pixel point of the deformation image can be constructed to obtain the deformation image of the target clothing.

Through the foregoing solution, the deformation image is obtained using the adjustment parameter of each pixel point, so that the deformation image can be more consistent with the gestures and postures of the target person, and the target clothing can present deformations that fit the gestures and the postures of the target person.

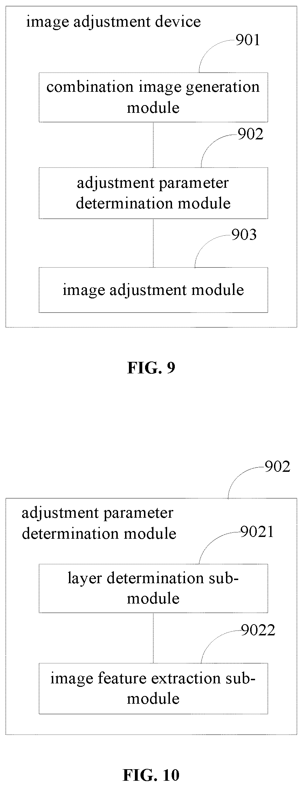

As shown in FIG. 9, in one embodiment, an image adjustment apparatus is provided and includes the following components:
a combination image generation module 901 configured for generating a combination image of a target person and a target clothing based on a target clothing image and a target person image;
an adjustment parameter determination module 902 configured for obtaining an adjustment parameter of the target clothing in the target clothing image based on image features of the target clothing image and image features of the combination image; and
an image adjustment module 903 configured for obtaining a deformation image of the target clothing according to the adjustment parameter and the target clothing image, where the deformation image is taken as an adjustment result of the target clothing image.

As shown in FIG. 10, in one embodiment, the adjustment parameter determination module 902 includes:
a layer determination sub-module 9021 configured for determining N clothing layers of different sizes of the target clothing image and N combination layers of different sizes of the combination image, where N is a positive integer; and
an image feature extraction sub-module 9022 configured for extracting image features of each of the clothing layers and image features of each of the combination layers as the image features of the target clothing image and the image features of the combination image, respectively.

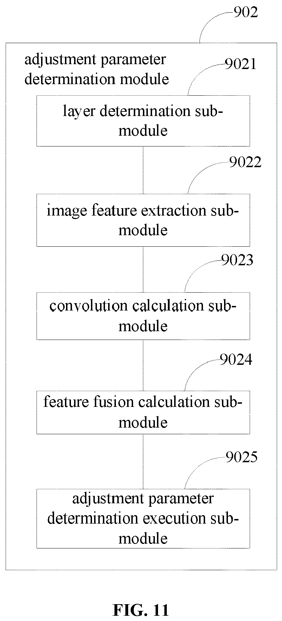

As shown in FIG. 11, in one embodiment, the adjustment parameter determination module 902 further includes:
a convolution calculation sub-module 9023 configured for performing convolution calculation on a layer feature of an i-th clothing layer of the target clothing image, a layer feature of an i-th combination layer of the combination image, and a (i-1)-th feature fusion calculation result, to obtain an i-th convolution calculation result;
a feature fusion calculation sub-module 9024 configured for performing an image affine transformation on the i-th convolution calculation result, to obtain an i-th feature fusion calculation result; and
an adjustment parameter determination execution sub-module 9025 configured for taking an N-th feature fusion calculation result as the adjustment parameter of the target clothing, where i is a positive integer and i≤N.

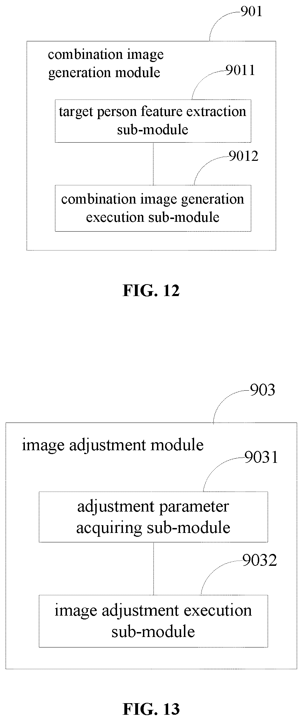

As shown in FIG. 12, in one embodiment, the combination image generation module 901 includes:
a target person feature extraction sub-module 9011 configured for extracting human body key points and human body segmentation images from the target person image; and
a combination image generation execution sub-module 9012 configured for using a first model to generate a mask of various parts of the target person covered by the target clothing, based on the human body key points, the human body segmentation images and the target clothing image, wherein the mask is taken as the combination image.

As shown in FIG. 13, in one embodiment, the image adjustment module 903 includes:
an adjustment parameter acquiring sub-module 9031 configured for acquiring an adjustment parameter of each pixel point in the deformation image, and establishing a corresponding relationship between each pixel point in the deformation image and a pixel point in the target clothing image through the adjustment parameter of each pixel point in the deformation image; and
an image adjustment execution sub-module 9032 configured for obtaining the deformation image by using the corresponding relationship.

According to the embodiments of the present application, the present application further provides an electronic device and a readable storage medium.

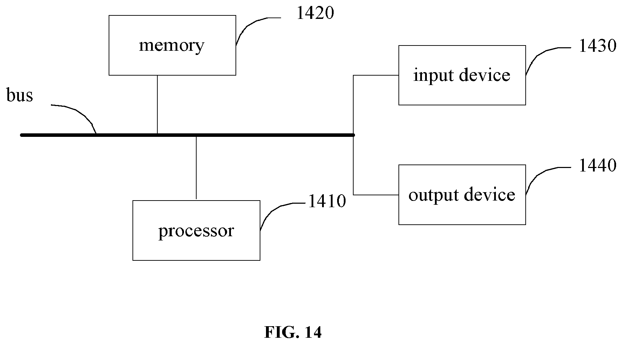

FIG. 14 is a block diagram of an electronic device of an image adjustment method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital assistant, cellular telephones, smart phones, wearable devices, and other similar computing devices. The components shown herein, their connections and relationships, and their functions are by way of example only and are not intended to limit the implementations of the present application described and/or claimed herein.

As shown in FIG. 14, the electronic device includes: one or more processors 1410, a memory 1420, and interfaces for connecting various components, including highspeed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a graphical user interface (GUI) on an external input/output device, such as a display device coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 14, one processor 1410 is taken as an example.

The memory 1420 is a non-transitory computer-readable storage medium provided herein. The memory stores instructions executable by at least one processor to enable the at least one processor to implement the image adjustment method provided herein. The non-transitory computer-readable storage medium of the present application stores computer instructions for enabling a computer to implement the image adjustment method provided herein.

The memory 1420, as a non-transitory computer-readable storage medium, may be used to store non-transitory software programs, non-transitory computer-executable programs, and modules, such as program instructions/modules corresponding to the image adjustment method of embodiments of the present application (e.g., the combination image generation module 901, the adjustment parameter determination module 902 and the image adjustment module 903 shown in FIG. 9). The processor 1410 executes various functional applications of the server and data processing, i.e., the image adjustment method in the above-mentioned method embodiment, by operating non-transitory software programs, instructions, and modules stored in the memory 1420.

The memory 1420 may include a program storage area and a data storage area, wherein the program storage area may store an application program required by an operating system and at least one function; the data storage area may store data created according to the use of the electronic device for the image adjustment method, etc. In addition, the memory 1420 may include a high speed random access memory, and may also include a non-transitory memory, such as at least one magnetic disk storage device, a flash memory device, or other non-transitory solid state memory device. In some embodiments, the memory 1420 may optionally include a memory remotely located with respect to the processor 1410, which may be connected via a network to the electronic device for the image adjustment method. Examples of such networks include, but are not limited to, the Internet, intranets, local area networks, mobile communication networks, and combinations thereof.

The electronic device for the image adjustment method may further include an input device 1430 and an output device 1440. The processor 1410, the memory 1420, the input device 1430, and the output device 1440 may be connected via a bus or otherwise. FIG. 14 takes a bus connection as an example.

The input device 1430 may receive input digital or character information and generate key signal inputs related to user settings and functional controls of the electronic device of the image adjustment method, such as input devices including touch screens, keypads, mice, track pads, touch pads, pointing sticks, one or more mouse buttons, trackballs, joysticks, etc. The output device 1440 may include a display device, an auxiliary lighting device (e.g., a light emitting diode (LED)), a tactile feedback device (e.g., a vibration motor), and the like. The display device may include, but is not limited to, a liquid crystal display (LCD), an LED display, and a plasma display. In some embodiments, the display device may be a touch screen.

Various embodiments of the systems and techniques described herein may be implemented in digital electronic circuit systems, integrated circuit systems, application specific integrated circuits (ASICs), computer hardware, firmware, software, and/or combinations thereof. These various implementations may include: an implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide an interaction with a user, the systems and techniques described herein may be implemented on a computer having: a display device (e.g., a cathode ray tube (CRT) or a liquid crystal display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: local area networks (LANs), wide area networks (WANs), and the Internet.

The computer system may include a client and a server. The client and the server are typically remote from each other and typically interact through a communication network. A relationship between the client and the server is generated by computer programs operating on respective computers and having a client-server relationship with each other. The server may be a cloud server, also referred to as a cloud computing server or a cloud host, which is a host product in the cloud computing service system to solve shortcomings of difficult management and weak business scalability in traditional physical hosts and VPS services.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors. Any modifications, equivalents, and improvements within the spirit and principles of this application are intended to be included within the scope of the present application.

## Claims

1. An image adjustment method, comprising:
generating (S101) a combination image of a target person and a target clothing based on a target clothing image and a target person image;
obtaining (S102) an adjustment parameter of the target clothing in the target clothing image based on image features of the target clothing image and image features of the combination image; and
obtaining (S103) a deformation image of the target clothing according to the adjustment parameter and the target clothing image, wherein the deformation image is taken as an adjustment result of the target clothing image.

2. The method of claim 1, wherein the image features of the target clothing image and the image features of the combination image, are determined in a way comprising:
determining (S401) N clothing layers of different sizes of the target clothing image and N combination layers of different sizes of the combination image, where N is a positive integer; and
extracting (S4102) image features of each of the clothing layers and image features of each of the combination layers as the image features of the target clothing image and the image features of the combination image, respectively.

3. The method of claim 2, wherein the obtaining the adjustment parameter of the target clothing in the target clothing image based on the image features of the target clothing image and the image features of the combination image, comprises:
performing (S1021) convolution calculation on a layer feature of an i-th clothing layer of the target clothing image, a layer feature of an i-th combination layer of the combination image, and a (i-1)-th feature fusion calculation result, to obtain an i-th convolution calculation result;
performing (S1022) an image affine transformation on the i-th convolution calculation result, to obtain an i-th feature fusion calculation result; and
taking (S1023) an N-th feature fusion calculation result as the adjustment parameter of the target clothing, where i is a positive integer and i≤N.

4. The method of any one of claims 1 to 3, wherein the generating the combination image of the target person and the target clothing based on the target clothing image and the target person image, comprises:
extracting (S1011) human body key points and human body segmentation images from the target person image; and
using (S1012) a first model to generate a mask of various parts of the target person covered by the target clothing, based on the human body key points, the human body segmentation images and the target clothing image, wherein the mask is taken as the combination image.

5. The method of any one of claims 1 to 4, wherein the obtaining the deformation image of the target clothing according to the adjustment parameter and the target clothing image, comprises:
acquiring (S1031) an adjustment parameter of each pixel point in the deformation image, and establishing a corresponding relationship between each pixel point in the deformation image and a pixel point in the target clothing image through the adjustment parameter of each pixel point in the deformation image; and
obtaining (S1032) the deformation image by using the corresponding relationship.

6. An image adjustment apparatus, comprising:
a combination image generation module (901) configured for generating a combination image of a target person and a target clothing based on a target clothing image and a target person image;
an adjustment parameter determination module (902) configured for obtaining an adjustment parameter of the target clothing in the target clothing image based on image features of the target clothing image and image features of the combination image; and
an image adjustment module (903) configured for obtaining a deformation image of the target clothing according to the adjustment parameter and the target clothing image, wherein the deformation image is taken as an adjustment result of the target clothing image.

7. The apparatus of claim 6, wherein the adjustment parameter determination module comprises:
a layer determination sub-module (9021) configured for determining N clothing layers of different sizes of the target clothing image and N combination layers of different sizes of the combination image, where N is a positive integer; and
an image feature extraction sub-module (9022) configured for extracting image features of each of the clothing layers and image features of each of the combination layers as the image features of the target clothing image and the image features of the combination image, respectively.

8. The apparatus of claim 7, wherein the adjustment parameter determination module further comprises:
a convolution calculation sub-module (9023) configured for performing convolution calculation on a layer feature of an i-th clothing layer of the target clothing image, a layer feature of an i-th combination layer of the combination image, and a (i-1)-th feature fusion calculation result, to obtain an i-th convolution calculation result;
a feature fusion calculation sub-module (9024) configured for performing an image affine transformation on the i-th convolution calculation result, to obtain an i-th feature fusion calculation result; and
an adjustment parameter determination execution sub-module (9025) configured for taking an N-th feature fusion calculation result as the adjustment parameter of the target clothing, where i is a positive integer and i≤N.

9. The apparatus of any one of claims 6 to 8, wherein the combination image generation module comprises:
a target person feature extraction sub-module (9011) configured for extracting human body key points and human body segmentation images from the target person image; and
a combination image generation execution sub-module (9012) configured for using a first model to generate a mask of various parts of the target person covered by the target clothing, based on the human body key points, the human body segmentation images and the target clothing image, wherein the mask is taken as the combination image.

10. The apparatus of any one of claims 6 to 9, wherein the image adjustment module comprises:
an adjustment parameter acquiring sub-module (9031) configured for acquiring an adjustment parameter of each pixel point in the deformation image, and establishing a corresponding relationship between each pixel point in the deformation image and a pixel point in the target clothing image through the adjustment parameter of each pixel point in the deformation image; and
an image adjustment execution sub-module (9032) configured for obtaining the deformation image by using the corresponding relationship.

11. An electronic device, comprising:
at least one processor (1410); and
a memory (1420) communicatively connected to the at least one processor; wherein,
the memory stores instructions executable by the at least one processor to enable the at least one processor to implement the method of any one of claims 1 to 5.

12. A non-transitory computer-readable storage medium storing computer instructions for causing a computer to perform the method of any one of claims 1 to 5.

13. A computer program product comprising computer program instructions, the computer program instructions, when executed by a computer, cause the computer to perform the method according to any one of claims 1 to 5.
